# EUROPEAN PATENT SPECIFICATION

(11) **EP 3 712 203 B1**
(45) Date of publication and mention of the grant of the patent: **04.03.2026**
(21) Application number: 18877423.6
(22) Date of filing: 01.11.2018
(51) Int. Cl.: C08J 9/30, B32B 27/40, D06N 3/14, D06N 3/00, C08G 18/08

(54) **FOAMED URETHANE SHEET AND SYNTHETIC LEATHER**
GESCHÄUMTE URETHANFOLIE UND KUNSTLEDER
FEUILLE EN MOUSSE D'URÉTHANE, ET CUIR SYNTHÉTIQUE

(30) Priority: 15.11.2017 JP 2017219952; 15.11.2017 JP 2017219953; 01.12.2017 JP 2017231691; 05.12.2017 JP 2017233365
(43) Date of publication of application: 23.09.2020
(73) Proprietor: DIC Corporation, Tokyo 174-8520 (JP)
(72) Inventor: TETSUI Tomohiro, Takaishi-shi Osaka 592-0001 (JP)
(74) Representative: Kraus & Lederer PartGmbB
(86) International application number: PCT/JP2018/040669
(87) International publication number: WO 2019/098039

(56) References cited:
- WO-A1-2015/029879
- JP-A- 2003 211 612
- JP-A- 2010 500 479
- JP-A- 2015 205 424
- JP-A- H09 158 056
- US-A1- 2009 311 480
- US-A1- 2015 259 851
- US-A1- 2015 284 902
- US-A1- 2015 376 324
- DATABASE WPI Week 201154, Derwent World Patents Index; AN 2011-H90403, XP002803627
- DATABASE WPI Week 199734, Derwent World Patents Index; AN 1997-370139, XP002803628

## Description

### Technical Field

The present invention relates to a foamed urethane sheet.

### Background Art

Polyurethane resins have excellent mechanical strength and flexibility, and have been used in various applications, such as a coating agent and an adhesive. Especially, a solvent urethane resin containing dimethylformamide (DMF) has been widely used, but the use of DMF is more and more strictly regulated, and there is a pressing need for the development of environment-friendly products of urethane resin, such as weak solvent, aqueous solvent, or solvent-less products.

Among such products, aqueous urethane (PUD) having a urethane resin dispersed in water is being most energetically studied. In the use of the aqueous urethane in various applications, there are many needs for forming a foamed material from the aqueous urethane for improving the texture and the like. With respect to the method for forming a foamed material from aqueous urethane, studies are made on, for example, a method of incorporating microcapsules into the aqueous urethane, and a mechanical foaming method of dispersing a gas, such as carbon dioxide, in a PUD blend (see, for example, PTL 1). However, the method of incorporating microcapsules has problems in that the obtained foamed material has poor texture, and in that expansion of the microcapsules causes poor smoothness. Further, in the method of dispersing a gas, the bubbles generated in the PUD blend, for example, disappear during the process of producing a foamed material, and hence it is difficult to control the size of bubbles and the like, making it difficult to stably obtain a foamed material having excellent texture.

### Citation List

### Patent Literature

PTL 1: JP-A-2007-191810

Further relevant information illustrating the prior art documentation relative to these issues can be found in the following patents : CN 102 080 332 A, US 2015/376324 A1, US 2015/259851 A1, US 2009/311480 A1, JP H09 158056 A and US 2015/284902 A1.

### Summary of Invention

### Technical Problem

An object to be achieved by the present invention is to provide a foamed urethane sheet which uses a urethane resin composition containing water, and which has excellent texture and tensile strength.

### Solution to Problem

The present invention provides a foamed urethane sheet which is formed from a urethane resin composition containing a urethane resin (A), water (B), and a surfactant (C) having 10 or more carbon atoms, and has a density of 200 to 1,000 kg/m³. Wherein the urethane resin is defined according to claim 1.

Further, the invention provides a synthetic leather having at least a substrate (i) and a polyurethane layer (ii), wherein the polyurethane layer (ii) is formed from the above-mentioned foamed urethane sheet.

### Advantageous Effects of Invention

The foamed urethane sheet of the invention has excellent texture and tensile strength.

Further, when the foamed urethane sheet is applied to a synthetic leather, the obtained synthetic leather is advantageous not only in that it further has excellent peel strength, but also in that embossing having excellent design properties can be uniformly formed on the surface of the synthetic leather.

### Description of Embodiments

The foamed urethane sheet of the present invention is formed from a urethane resin composition containing a urethane resin (A), water (B), and a surfactant (C) having no aromatic ring and having a hydrophobic portion having 10 or more carbon atoms, and has a density of 200 to 1,000 kg/m³.

In the present invention, a urethane resin (A) having an anionic group is used.

As a method for obtaining the urethane resin having an anionic group, at least one compound selected from the group consisting of a glycol compound having a carboxyl group is used as a raw material.

As the glycol compound having a carboxyl group, for example, 2,2-dimethylolpropionic acid, 2,2-dimethylolbutanoic acid, 2,2-dimethylolbutyric acid, 2,2-dimethylolpropionic acid, or 2,2-valeric acid can be used. These compounds may be used individually or in combination.

In addition to the glycol compound having a carboxyl group, a compound having a sulfonyl group, for example, 3,4-diaminobutanesulfonic acid, 3,6-diamino-2-toluenesulfonic acid, 2,6-diaminobenzenesulfonic acid, or N-(2-aminoethyl)-2-aminoethylsulfonic acid can be used. These compounds may be used individually or in combination.

From the viewpoint of achieving still further excellent water dispersion stability, the amount of the raw materials used for producing the urethane resin having an anionic group is preferably in the range of 0.1 to 4.8% by mass, more preferably in the range of 0.5 to 4% by mass, further preferably in the range of 1 to 3% by mass, based on the total mass of the raw materials of the urethane resin (A).

Apart of or all of the carboxyl group and sulfonyl group may be neutralized by a basic compound in the urethane resin composition. As the basic compound, for example, there can be used ammonia; an organic amine, such as triethylamine, pyridine, or morpholine; an alkanolamine, such as monoethanolamine or dimethylethanolamine; or a metal basic compound containing sodium, potassium, lithium, calcium.

As the urethane resin (A), specifically, for example, there can be used a reaction product of a polyisocyanate (a1), a polyol (a2), and the raw materials used for producing the above-mentioned aqueous urethane resin having a hydrophilic group.

As the polyisocyanate (a1), 4,4'-diphenylmethane diisocyanate, cyclohexylmethane diisocyanate, isophorone diisocyanate may be used individually or in combination.

From the viewpoint of the production stability and mechanical physical properties of the obtained film, the amount of the polyisocyanate (a1) used is preferably in the range of 5 to 40% by mass, more preferably in the range of 10 to 30% by mass, based on the total mass of the raw materials of the urethane resin (A).

As the polyol (a2), for example, there can be used a polyether polyol, a polyester polyol, a polyacrylic polyol, a polycarbonate polyol, a polybutadiene polyol These polyols may be used individually or in combination.

From the viewpoint of the mechanical strength of the obtained film, the polyol (a2) preferably has a number average molecular weight in the range of 500 to 8,000, more preferably in the range of 800 to 4,000. The number average molecular weight of the polyol (a2) indicates a value as measured by a gel permeation column chromatography (GPC) method.

The polyol (a2) and a chain extender (a2') having a number average molecular weight of 50 to 450 are used in combination. As the chain extender (a2'), for example, there can be used a chain extender having a hydroxyl group, such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerol, sorbitol, bisphenol A, 4,4'-dihydroxydiphenyl, 4,4'-dihydroxydiphenyl ether, or trimethylolpropane; or a chain extender having an amino group, such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, or hydrazine. These chain extenders may be used individually or in combination.

When the chain extender (a2') is used, from the viewpoint of easily controlling the flow starting temperature of the obtained urethane resin (A) and achieving still further excellent tensile strength, the amount of the chain extender (a2') used is preferably in the range of 0.8 to 4.3% by mass, more preferably in the range of 1 to 3.5% by mass, further preferably in the range of 1.5 to 3.2% by mass, based on the total mass of the raw materials of the urethane resin (A).

As a method for producing the urethane resin (A), for example, there can be mentioned a method in which all the polyol (a2), the raw materials used for producing the urethane resin having a hydrophilic group, the chain extender (a2'), and the polyisocyanate (a1) are charged and subjected to reaction. The reaction in the above method can be conducted, for example, at 50 to 100°C for 3 to 10 hours.

In producing the urethane resin (A), the molar ratio of the isocyanate group of the polyisocyanate (a1) to the total of the hydroxyl group of the polyol (a2), the hydroxyl group and amino group of the raw materials used for producing the urethane resin having a hydrophilic group, and the hydroxyl group and amino group of the chain extender (a2') [isocyanate group/(hydroxyl group and amino group)] is preferably in the range of 0.8 to 1.2, more preferably in the range of 0.9 to 1.1.

In producing the urethane resin (A), it is preferred that the isocyanate group remaining in the urethane resin (A) is deactivated. When deactivating the isocyanate group, an alcohol having one hydroxyl group, such as methanol, is preferably used. The amount of the alcohol used is preferably in the range of 0.001 to 10 parts by mass, relative to 100 parts by mass of the urethane resin (A).

Further, when producing the urethane resin (A), an organic solvent may be used. As the organic solvent, for example, there can be used a ketone compound, such as acetone or methyl ethyl ketone; an ether compound, such as tetrahydrofuran or dioxane; an acetate compound, such as ethyl acetate or butyl acetate; a nitrile compound, such as acetonitrile; or an amide compound, such as dimethylformamide or N-methylpyrrolidone. These organic solvents may be used individually or in combination. It is preferred that the organic solvent is removed by a distillation method when obtaining the final urethane resin composition.

From the viewpoint of stably retaining the foam (particularly in the drying step) generated in the below-mentioned foaming step so as to stably obtain a foamed urethane sheet having a density in the range of 200 to 1,000 kg/m³, the flow starting temperature of the urethane resin (A) is in the range of 80 to 220°C.

As a method for controlling the flow starting temperature of the urethane resin (A), there can be mentioned a method of controlling the flow starting temperature by mainly the type of the polyol (a2) which is the raw material of the below-mentioned urethane resin (A), the amount of the chain extender (a2') used, and the type of the polyisocyanate (a1). As a method of controlling the flow starting temperature to be higher, for example, there can be mentioned the use of a highly crystalline polyol, such as polycarbonate polyol, as the polyol (a2), an increase of the amount of the chain extender (a2') used, and the use of a highly crystalline polyisocyanate, such as dicyclohexylmethane diisocyanate or 4,4'-diphenylmethane diisocyanate, as the polyisocyanate (a1) . Further, as a method of controlling the flow starting temperature to be lower, for example, there can be mentioned the use of a poorly crystalline polyol, such as polyoxypropylene glycol, as the polyol (a2), a reduction of the amount of the chain extender (a2') used, and the use of a poorly crystalline polyisocyanate, such as isophorone diisocyanate or toluene diisocyanate, as the polyisocyanate (a1). Accordingly, the flow starting temperature of the urethane resin (A) can be controlled by appropriately selecting a method from these methods. A method for measuring the flow starting temperature of the urethane resin (A) is described in the Examples shown below.

From the viewpoint of easily controlling the flow starting temperature and achieving still further excellent retention of foam, texture, and tensile strength, it is used a urethane resin (A-A-1) having an anionic group which is a reaction product of at least one polyisocyanate selected from the group consisting of 4,4'-diphenylmethane diisocyanate, toluene diisocyanate, cyclohexylmethane diisocyanate, and isophorone diisocyanate, the polyol (a2), a glycol compound having a carboxyl group, and a chain extender containing the chain extender (a2') having a number average molecular weight of 50 to 450.

As the water (B), for example, ion-exchanged water or distilled water can be used. These waters may be used individually or in combination.

From the viewpoint of the water dispersion stability and working properties, the mass ratio of the urethane resin (A) to the water (B) [(A)/(B)] is preferably in the range of 10/80 to 70/30, more preferably in the range of 20/80 to 60/40.

With respect to the surfactant (C), for preventing the foam formed by foaming from disappearing, it is necessary that the surfactant (C) having no aromatic ring and having a hydrophobic portion having 10 or more carbon atoms is used.

As the surfactant (C), for example, a surfactant represented by the general formula (1) below; a fatty acid salt, a succinic acid salt, a sulfosuccinic acid salt, an octadecylsulfosuccinic acid salt, a sulfosuccinic acid ester can be used. These surfactants may be used individually or in combination.

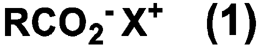

In the formula (1), R represents an alkyl group having a linear or branched structure having 10 to 20 carbon atoms, and X represents Na, K, NH₄, morpholine, ethanolamine, or triethanolamine.

With respect to the surfactant (C), among those mentioned above, the surfactant represented by the general formula (1) above is preferably used because it has still further excellent retention of foam, and the surfactant having a linear alkyl group having 13 to 19 carbon atoms is more preferably used, and a stearic acid salt is further preferred.

From the viewpoint of obtaining still further excellent retention of foam, the amount of the surfactant (C) used is preferably in the range of 0.01 to 10 parts by mass, more preferably in the range of 0.1 to 5 parts by mass, relative to 100 parts by mass of the urethane resin (A) (= solids).

The urethane resin composition contains the above-mentioned urethane resin (A), water (B), and surfactant (C) as essential components, but may contain an additional additive if necessary.

With respect to the additional additive, for example, there can be used a crosslinking agent, a neutralizing agent, a thickener, a urethane-forming reaction catalyst, a filler, a pigment, a dye, a flame retardant, a leveling agent, an anti-blocking agent. These additives may be used individually or in combination.

The crosslinking agent is used for the purpose of improving the mechanical strength of the foamed urethane sheet, and, for example, there can be used a polyisocyanate crosslinking agent, an epoxy crosslinking agent, a melamine crosslinking agent, or an oxazoline crosslinking agent. These crosslinking agents may be used individually or in combination. When using the crosslinking agent, the amount of the crosslinking agent used, for example, relative to 100 parts by mass of the urethane resin (A) (= solids), is preferably in the range of 0.01 to 100 parts by mass, more preferably in the range of 0.1 to 50 parts by mass, further preferably in the range of 0.5 to 30 parts by mass, especially preferably 1 to 10 parts by mass.

Next, a method for producing the foamed urethane sheet of the invention is described.

The foamed urethane sheet is produced by foaming the urethane resin composition to obtain a foamed liquid, and applying the obtained foamed liquid to a substrate, and drying the applied liquid so as to have a density of 200 to 1,000 kg/m³.

As a method for foaming the urethane resin composition to obtain a foamed liquid, for example, there can be mentioned a method in which the urethane resin composition is manually stirred, and a method in which the urethane resin composition is stirred using a mixer, such as a mechanical mixer. As a method using a mixer, for example, there can be mentioned a method in which the urethane resin composition is stirred at 500 to 3,000 rpm for 10 seconds to 3 minutes. In this case, in view of easily controlling the density of the foamed urethane sheet to be in the range defined in the invention, the foamed liquid obtained after foaming preferably has a volume 1.3 to 7 times, more preferably 1.2 to 2 times, further preferably 1.3 to 1.7 times the volume of the urethane resin composition before foaming.

As a method for applying the obtained foamed liquid to a substrate, such as release paper, for example, there can be mentioned a method using a roll coater, a knife coater, a comma coater, an applicator.

As a method for drying the applied material, for example, there can be mentioned a method in which the applied material is dried at a temperature of 60 to 130°C for 30 seconds to 10 minutes.

The foamed urethane sheet obtained by the above-mentioned method has a thickness of, for example, 5 to 200 µm.

It is necessary that the foamed urethane sheet has a density of 200 to 1,000 kg/m³. When the density is in this range, a sheet having both excellent texture and excellent tensile strength is obtained. From the viewpoint of the applicability of the foamed urethane sheet to various uses, the density of the foamed urethane sheet is preferably in the range of 300 to 900 kg/m³, more preferably in the range of 400 to 800 kg/m³. The density of the foamed urethane sheet indicates a value determined by dividing the mass of the foamed urethane sheet by the volume of the sheet.

Next, the synthetic leather of the invention is described.

The synthetic leather of the invention is a synthetic leather having at least a substrate (i) and a polyurethane layer (ii), wherein the polyurethane layer (ii) is formed from the above-mentioned foamed urethane sheet.

As a method for producing the synthetic leather, for example, there can be mentioned:
(X) a method in which the urethane resin composition is foamed to obtain a foamed liquid, and the obtained foamed liquid is applied onto release paper, and dried, and bonded to the above-mentioned substrate (i),
(Y) a method in which the urethane resin composition is foamed to obtain a foamed liquid, and the obtained foamed liquid is applied onto a skin layer formed on release paper, and dried, and bonded to the substrate (i), and
(Z) a method in which the urethane resin composition is foamed to obtain a foamed liquid, and the obtained foamed liquid is applied onto the substrate (i), and dried, and, if necessary, a skin layer (iii) formed on release paper is bonded onto the resultant substrate.

As the substrate (i), for example, there can be used a fiber substrate, such as nonwoven fabric, woven fabric, or knitted fabric, each formed from a polyester fiber, a polyethylene fiber, a nylon fiber, an acrylic fiber, a polyurethane fiber, an acetate fiber, a rayon fiber, a polylactate fiber, cotton, linen, silk, wool, a glass fiber, a carbon fiber, a mixed fiber thereof; the above-mentioned nonwoven fabric which is impregnated with a resin, such as a polyurethane resin; the above-mentioned nonwoven fabric which has further formed thereon a porous layer; a resin substrate, such as a thermoplastic urethane (TPU).

The polyurethane layer (ii) is formed from the above-mentioned foamed sheet, and, in view of obtaining a synthetic leather having both still further excellent texture and peel strength, the polyurethane layer (ii) preferably has a density in the range of 300 to 900 kg/m³, more preferably in the range of 400 to 800 kg/m³. The density of the polyurethane layer (ii) indicates a value determined by dividing a value, which is obtained by subtracting the weight of the substrate (i) 10 cm square from the weight of the synthetic leather 10 cm square, by the thickness of the polyurethane layer (ii). The density of the polyurethane layer (ii) can be controlled by appropriately foaming the urethane resin composition.

The skin layer (iii) can be formed by a known method from a known material, and, for example, a solvent urethane resin, an aqueous urethane resin, a silicone resin, a polypropylene resin, a polyester resin can be used. In the case of particularly achieving soft texture and excellent heat resistance and hydrolytic resistance, a polycarbonate urethane resin is preferably used. Further, for reducing the use of DMF to protect the environment, an aqueous polycarbonate urethane resin is more preferably used.

On the skin layer (iii), if necessary, a surface treatment layer (iv) may be formed for the purpose of improving the marring resistance. The surface treatment layer (iv) can be formed by a known method from a known material.

As apparent from the above, by virtue of using the above-mentioned foamed urethane sheet having excellent texture and tensile strength, the synthetic leather of the invention is advantageous not only in that it further has excellent peel strength, but also in that embossing having excellent design properties can be uniformly formed on the surface of the synthetic leather.

As a method for embossing the polyurethane layer (ii), for example, there can be mentioned a method in which release paper having formed thereon a design, such as an uneven pattern, is placed on the polyurethane layer (ii) of the synthetic leather, and subjected to hot pressing by a preheated roll; and a method in which the polyurethane layer (ii) of the synthetic leather is subjected to hot pressing using a roll coater having formed thereon a design, such as an uneven pattern. In the hot pressing, a roll can be heated, for example, at 50 to 200°C.

### Examples

Hereinbelow, the present invention will be described in more detail with reference to the following Examples.

### [Synthesis Example 1] Preparation of urethane resin (A-1)

1,000 Parts by mass of polycarbonate polyol ("NIPPOLAN 980R", manufactured by Nippon Polyurethane Industry Co., Ltd.; number average molecular weight: 2,000), 17 parts by mass of 2,2-dimethylolpropionic acid, 47 parts by mass of ethylene glycol, and 344 parts by mass of diphenylmethane diisocyanate (hereinafter, abbreviated to "MDI") were subjected to reaction at 70°C in the presence of 3,281 parts by mass of methyl ethyl ketone and 0.1 part by mass of tin(II) octylate until the solution viscosity reached 20,000 mPa·s, and then 3 parts by mass of methanol was added to terminate the reaction, obtaining a methyl ethyl ketone solution of a urethane resin. Into the obtained urethane resin solution were mixed 70 parts by mass of polyoxyethylene distyrenated phenyl ether (Hydrophile-Lipophile Balance (hereinafter, abbreviated to "HLB") : 14) and 13 parts by mass of triethylamine, and then 800 parts by mass of ion-exchanged water was added to the resultant mixture to cause phase reversal of emulsion, obtaining an emulsion having the urethane resin (A-1) dispersed in water.

Then, methyl ethyl ketone was distilled off from the emulsion to obtain a urethane resin composition containing the urethane resin (A-1) in an amount of 50% by mass.

### [Synthesis Example 2] Preparation of urethane resin (A-2)

1,000 Parts by mass of polyether polyol ("PTMG 2000", manufactured by Mitsubishi Chemical Corporation; number average molecular weight: 2,000), 17 parts by mass of 2,2-dimethylolpropionic acid, 47 parts by mass of ethylene glycol, and 344 parts by mass of MDI were subjected to reaction at 70°C in the presence of 3,281 parts by mass of methyl ethyl ketone and 0.1 part by mass of tin(II) octylate until the solution viscosity reached 20,000 mPa·s, and then 3 parts by mass of methanol was added to terminate the reaction, obtaining a methyl ethyl ketone solution of a urethane resin. Into the obtained urethane resin solution were mixed 70 parts by mass of polyoxyethylene distyrenated phenyl ether (HLB: 14) and 13 parts by mass of triethylamine, and then 800 parts by mass of ion-exchanged water was added to the resultant mixture to cause phase reversal of emulsion, obtaining an emulsion having the urethane resin (A-2) dispersed in water.

Then, methyl ethyl ketone was distilled off from the emulsion to obtain a urethane resin composition containing the urethane resin (A-2) in an amount of 50% by mass.

### [Synthesis Example 3] Preparation of urethane resin (A-3)

1,000 Parts by mass of polyester polyol ("Placcel 220", manufactured by Daicel Corporation; number average molecular weight: 2,000), 17 parts by mass of 2,2-dimethylolpropionic acid, 47 parts by mass of ethylene glycol, and 344 parts by mass of MDI were subjected to reaction at 70°C in the presence of 3,281 parts by mass of methyl ethyl ketone and 0.1 part by mass of tin (II) octylate until the solution viscosity reached 20,000 mPa·s, and then 3 parts by mass of methanol was added to terminate the reaction, obtaining a methyl ethyl ketone solution of a urethane resin. Into the obtained urethane resin solution were mixed 70 parts by mass of polyoxyethylene distyrenated phenyl ether (HLB: 14) and 13 parts by mass of triethylamine, and then 800 parts by mass of ion-exchanged water was added to the resultant mixture to cause phase reversal of emulsion, obtaining an emulsion having the urethane resin (A-3) dispersed in water.

Then, methyl ethyl ketone was distilled off from the emulsion to obtain a urethane resin composition containing the urethane resin (A-3) in an amount of 50% by mass.

### [Synthesis Example 4] Preparation of urethane resin (A-4)

1,000 Parts by mass of polycarbonate polyol ("NIPPOLAN 980R", manufactured by Nippon Polyurethane Industry Co., Ltd.; number average molecular weight: 2,000), 17 parts by mass of 2,2-dimethylolpropionic acid, and 262 parts by mass of dicyclohexylmethane diisocyanate (hereinafter, abbreviated to "H12MDI") were subjected to reaction at 70°C in the presence of 1,279 parts by mass of methyl ethyl ketone and 0.1 part by mass of tin(II) octylate until the isocyanate concentration reached 1.2% by mass, obtaining a methyl ethyl ketone solution of a urethane prepolymer. Into the obtained urethane resin solution were mixed 64 parts by mass of polyoxyethylene distyrenated phenyl ether (Hydrophile-Lipophile Balance (hereinafter, abbreviated to "HLB") : 14) and 28 parts by mass of triethylamine, and then 2,650 parts by mass of ion-exchanged water was added to the resultant mixture to cause phase reversal of emulsion, obtaining an emulsion having the urethane prepolymer dispersed in water. Into the obtained emulsion were mixed 21 parts by mass of ethylenediamine and 189 parts of ion-exchanged water to cause a chain extension reaction, obtaining a urethane resin composition.

Then, methyl ethyl ketone and water were distilled off from the urethane resin composition to obtain a urethane resin composition containing the urethane resin (A-4) in an amount of 50% by mass.

### [Synthesis Example 5] Preparation of urethane resin (A-5)

1,000 Parts by mass of polyether polyol ("PTMG 2000", manufactured by Mitsubishi Chemical Corporation; number average molecular weight: 2,000), 17 parts by mass of 2,2-dimethylolpropionic acid, and 262 parts by mass of H12MDI were subjected to reaction at 70°C in the presence of 1,279 parts by mass of methyl ethyl ketone and 0.1 part by mass of tin(II) octylate until the isocyanate concentration reached 1.2% by mass, obtaining a methyl ethyl ketone solution of a urethane resin prepolymer (A'-2). Into the obtained urethane resin solution were mixed 64 parts by mass of polyoxyethylene distyrenated phenyl ether (Hydrophile-Lipophile Balance (hereinafter, abbreviated to "HLB") : 14) and 28 parts by mass of triethylamine, and then 2,650 parts by mass of ion-exchanged water was added to the resultant mixture to cause phase reversal of emulsion, obtaining an emulsion having the urethane prepolymer dispersed in water. Into the obtained emulsion were mixed 21 parts by mass of ethylenediamine and 189 parts of ion-exchanged water to cause a chain extension reaction, obtaining a urethane resin composition.

Then, methyl ethyl ketone and water were distilled off from the urethane resin composition to obtain a urethane resin composition containing the urethane resin (A-5) in an amount of 50% by mass.

### [Synthesis Example 6] Preparation of urethane resin (A-6)

1,000 Parts by mass of polyester polyol ("Placcel 220", manufactured by Daicel Corporation; number average molecular weight: 2,000), 17 parts by mass of 2,2-dimethylolpropionic acid, and 262 parts by mass of H12MDI were subjected to reaction at 70°C in the presence of 1,279 parts by mass of methyl ethyl ketone and 0.1 part by mass of tin(II) octylate until the isocyanate concentration reached 1.2% by mass, obtaining a methyl ethyl ketone solution of a urethane resin prepolymer. Into the obtained urethane resin solution were mixed 64 parts by mass of polyoxyethylene distyrenated phenyl ether (Hydrophile-Lipophile Balance (hereinafter, abbreviated to "HLB") : 14) and 28 parts by mass of triethylamine, and then 2,650 parts by mass of ion-exchanged water was added to the resultant mixture to cause phase reversal of emulsion, obtaining an emulsion having the urethane prepolymer dispersed in water. Into the obtained emulsion were mixed 21 parts by mass of ethylenediamine and 189 parts of ion-exchanged water to cause a chain extension reaction, obtaining a urethane resin composition.

Then, methyl ethyl ketone and water were distilled off from the urethane resin composition to obtain a urethane resin composition containing the urethane resin (A-6) in an amount of 50% by mass.

### [Example 1]

To 100 parts by mass of the urethane resin composition obtained in Synthesis Example 1 were added 2 parts by mass of a thickener ("Borchi Gel ALA", manufactured by Borchers GmbH), 0.5 part by mass of ammonium stearate, and 4 parts by mass of a crosslinking agent ("EPOCROS WS-700", manufactured by Nippon Shokubai Co., Ltd.), and the resultant mixture was foamed by stirring using a mechanical mixer at 2,000 rpm for one minute to obtain a foamed liquid having a volume 1.5 times the original volume.

The obtained foamed liquid was applied to release paper, and dried at 80°C for 3 minutes and further at 120°C for 2 minutes to produce a foamed urethane sheet.

### [Examples 2 to 8]

Foamed urethane sheets were individually obtained in the same manner as in Example 1 except that the type of the aqueous urethane resin composition used and the amount of the ammonium stearate used were changed as shown in Tables 1 to 3.

### [Comparative Example 1]

To 100 parts by mass of the urethane resin composition obtained in Synthesis Example 1 were added 2 parts by mass of a thickener ("Borchi Gel ALA", manufactured by Borchers GmbH), 1.5 parts by mass of sodium dodecylbenzenesulfonate, and 4 parts by mass of a crosslinking agent ("EPOCROS WS-700", manufactured by Nippon Shokubai Co., Ltd.), and the resultant mixture was foamed by stirring using a mechanical mixer at 2, 000 rpm for one minute to obtain a foamed liquid having a volume 1.5 times the original volume.

The obtained foamed liquid was applied to release paper, and dried at 80°C for 3 minutes and further at 120°C for 2 minutes to produce a sheet.

### [Comparative Example 2]

To 100 parts by mass of the urethane resin composition obtained in Synthesis Example 1 were added 2 parts by mass of a thickener ("Borchi Gel ALA", manufactured by Borchers GmbH) and 4 parts by mass of a crosslinking agent ("EPOCROS WS-700", manufactured by Nippon Shokubai Co., Ltd.), and the resultant mixture was foamed by stirring using a mechanical mixer at 2,000 rpm for one minute to obtain a foamed liquid having a volume 1.5 times the original volume.

The obtained foamed liquid was applied to release paper, and dried at 80°C for 3 minutes and further at 120°C for 2 minutes, and the foam disappeared in the drying step, and thus a sheet having almost no pore was formed.

### [Comparative Example 3]

To 100 parts by mass of the urethane resin composition obtained in Synthesis Example 1 were added 2 parts by mass of a thickener ("Borchi Gel ALA", manufactured by Borchers GmbH), 1.5 parts by mass of sodium dodecylbenzenesulfonate, 1 part by mass of ammonium stearate, and 4 parts by mass of a crosslinking agent ("EPOCROS WS-700", manufactured by Nippon Shokubai Co., Ltd.), and the resultant mixture was foamed by stirring using a mechanical mixer at 2,000 rpm for one minute to obtain a foamed liquid having a volume 7 times the original volume.

The obtained foamed liquid was applied to release paper, and dried at 80°C for 3 minutes and further at 120°C for 2 minutes to produce a sheet.

### [Method for measuring a number average molecular weight]

The number average molecular weight of the polyol and the like used in the Synthesis Examples was measured by a gel permeation column chromatography (GPC) method under the conditions shown below.
Measuring apparatus: High-speed GPC apparatus ("HLC-8220GPC", manufactured by Tosoh Corp.)
Columns: The columns shown below, manufactured by Tosoh Corp., which are connected in series were used.
   "TSKgel G5000" (7.8 mm I.D. × 30 cm) × 1
   "TSKgel G4000" (7.8 mm I.D. × 30 cm) × 1
   "TSKgel G3000" (7.8 mm I.D. × 30 cm) × 1
   "TSKgel G2000" (7.8 mm I.D. × 30 cm) × 1
Detector: RI (differential refractometer)
Column temperature: 40°C
Eluent: Tetrahydrofuran (THF)
Flow rate: 1.0 mL/minute
Sample amount per injection: 100 µL (tetrahydrofuran solution having a sample concentration of 0.4% by mass)
Standard sample: A calibration curve was prepared using the standard polystyrenes shown below.

### (Standard polystyrenes)

"TSKgel standard polystyrene A-500", manufactured by Tosoh Corp.

"TSKgel standard polystyrene A-1000", manufactured by Tosoh Corp.

"TSKgel standard polystyrene A-2500", manufactured by Tosoh Corp.

"TSKgel standard polystyrene A-5000", manufactured by Tosoh Corp.

"TSKgel standard polystyrene F-1", manufactured by Tosoh Corp.

"TSKgel standard polystyrene F-2", manufactured by Tosoh Corp.

"TSKgel standard polystyrene F-4", manufactured by Tosoh Corp.

"TSKgel standard polystyrene F-10", manufactured by Tosoh Corp.

"TSKgel standard polystyrene F-20", manufactured by Tosoh Corp.

"TSKgel standard polystyrene F-40", manufactured by Tosoh Corp.

"TSKgel standard polystyrene F-80", manufactured by Tosoh Corp.

"TSKgel standard polystyrene F-128", manufactured by Tosoh Corp.

"TSKgel standard polystyrene F-288", manufactured by Tosoh Corp.

"TSKgel standard polystyrene F-550", manufactured by Tosoh Corp.

### [Method for measuring a flow starting temperature of urethane resin (A)]

The aqueous urethane resin composition obtained in the Synthesis Example was applied to release paper (thickness of the applied composition: 150 µm), and dried by means of a hot-air dryer at 70°C for 4 minutes and further at 120°C for 2 minutes to obtain a dried material. With respect to the obtained dried material, a flow starting temperature was measured using Flow Tester "CFT-500A", manufactured by Shimadzu Corporation (using a dice having a bore diameter of 1 mm and a length of 1 mm; load: 98 N; temperature increase rate: 3°C/minute).

### [Evaluation method for texture]

The obtained foamed urethane sheet was touched by hands, and evaluated according to the following criteria.
"A": Excellent flexibility.
"B": Slight flexibility.
"C": Poor flexibility.
"D": Hard.

### [Method for measuring a tensile strength]

The obtained urethane sheet was cut into a piece having a width of 10 mm and a length of 60 mm and the resultant piece was used as a test specimen. The test specimen was fixed at both ends by a chuck, and pulled using a tensile tester "Autograph AG-I" (manufactured by Shimadzu Corporation) at a crosshead speed of 300 mm/minute in an atmosphere at a temperature of 23°C and at a humidity of 60% to measure a tensile strength at 100% elongation, and the measured tensile strength was evaluated according to the following criteria.
"T": 10 N/cm² or more
"F": Less than 10 N/cm²

**Table 1**

| Table 1 | Example 1 | Example 2 | Example 3 | Example 4 |
|---|---|---|---|---|
| Urethane resin (A) | (A-1) | (A-2) | (A-3) | (A-1) |
| Aromatic polyisocyanate (a1) | MDI | MDI | MDI | MDI |
| Flow starting temperature (°C) | 160 | 160 | 160 | 160 |
| Surfactant (C) | Ammonium stearate | Ammonium stearate | Ammonium stearate | Ammonium stearate |
| Amount of (C) used (relative to 100 parts by mass of urethane resin (A) (solids)) | 1.0 | 1 | 1 | 3.5 |
| Density of foamed urethane sheet (kg/m³) | 660 | 670 | 660 | 680 |
| Evaluation of texture | A | A | A | A |
| Evaluation of tensile strength | T | T | T | T |

**Table 2**

| Table 2 | Example 5 | Example 6 | Example 7 | Example 8 |
|---|---|---|---|---|
| Urethane resin (A) | (A-4) | (A-5) | (A-6) | (A-4) |
| Aromatic polyisocyanate (a1) | H12MDI | H12MDI | H12MDI | H12MDI |
| Flow starting temperature (°C) | 160 | 160 | 160 | 160 |
| Surfactant (C) | Ammonium stearate | Ammonium stearate | Ammonium stearate | Ammonium stearate |
| Amount of (C) used (relative to 100 parts by mass of urethane resin (A) (solids)) | 1.0 | 1.0 | 1.0 | 3.5 |
| Density of foamed urethane sheet (kg/m³) | 660 | 680 | 670 | 680 |
| Evaluation of texture | A | A | A | A |
| Evaluation of tensile strength | T | T | T | T |

**Table 3**

| Table 3 | Comparative Example 1 | Comparative Example 2 | Comparative Example 3 |
|---|---|---|---|
| Urethane resin (A) | (A-1) | (A-1) | (A-1) |
| Aromatic polyisocyanate (a1) | MDI | MDI | MDI |
| Flow starting temperature (°C) | 160 | 160 | 160 |
| Surfactant (C) | Sodium dodecylbenzenesulfonate | | Ammonium stearate |
| Amount of (C) used (relative to 100 parts by mass of urethane resin (A) (solids)) | 1 | 0 | 1 |
| Density of foamed urethane sheet (kg/m³) | 990 | 1010 | 150 |
| Evaluation of texture | D | D | A |
| Evaluation of tensile strength | T | T | F |

It was found that the foamed urethane sheet of the present invention in Examples 1 to 8 has excellent texture and tensile strength.

On the other hand, in Comparative Example 1 which corresponds to an embodiment in which sodium dodecylbenzenesulfonate which has an aromatic ring was used instead of the surfactant (C), the retention of foam was poor, and the texture of the sheet was hard and poor.

In Comparative Example 2 which corresponds to an embodiment in which the surfactant (C) was not used, the retention of foam was poor, and the texture of the sheet was hard and poor.

In Comparative Example 3 which corresponds to an embodiment in which the foaming ratio is too large and the density is less than the range defined in the invention, the tensile strength was low.

### [Example 9]

To 100 parts by mass of the urethane resin composition obtained in Synthesis Example 1 were added 2 parts by mass of a thickener ("Borch Gel ALA", manufactured by Borchers GmbH), 1.5 parts by mass of ammonium stearate, and 4 parts by mass of a crosslinking agent ("EPOCROS WS-700", manufactured by Nippon Shokubai Co., Ltd.), and the resultant mixture was foamed by stirring using a mechanical mixer at 2,000 rpm for one minute to obtain a foamed liquid having a volume 1.5 times the original volume.

The obtained foamed liquid was applied to polyester fiber nonwoven fabric, and dried at 80°C for 3 minutes and further at 120°C for 2 minutes to form a polyurethane layer. Then, release paper having an uneven pattern formed thereon was placed on the obtained polyurethane layer, and subjected to pressing by a roll preheated at 180°C to obtain an embossed synthetic leather.

### [Examples 10 to 12]

Synthetic leathers were individually obtained in the same manner as in Example 9 except that the type of the urethane resin composition used and the amount of the ammonium stearate used were changed as shown in Table 4.

### [Evaluation method for texture]

The obtained synthetic leather was touched by hands, and evaluated according to the following criteria.
"A": Excellent flexibility.
"B": Slight flexibility.
"C": Poor flexibility.
"D": Hard.

### [Method for measuring a peel strength]

With respect to the synthetic leathers obtained in the Examples and Comparative Examples, a peel strength was measured using Shimadzu Autograph "AG-1" (manufactured by Shimadzu Corporation) under conditions at a full scale of 5 kg and at a head speed of 20 mm/minute, and evaluated according to the following criteria.
"A": 0.15 MPa or more
"B": 0.1 to less than 0.15 MPa
"C": Less than 0.1 MPa

### [Evaluation method for embossing characteristics]

The synthetic leathers obtained in the Examples and Comparative Examples were individually visually observed, and evaluated according to the following criteria.
"T": Wrinkles formed on the surface by embossing are uniform.
"F": Wrinkles formed on the surface by embossing are not uniform.

**Table 4**

| Table 4 | Example 9 | Example 10 | Example 11 | Example 12 |
|---|---|---|---|---|
| Urethane resin (A) | (A-1) | (A-2) | (A-3) | (A-4) |
| Aromatic polyisocyanate (a1) | MDI | MDI | MDI | H12MDI |
| Flow starting temperature (°C) | 160 | 160 | 160 | 160 |
| Surfactant (C) | Ammonium stearate | Ammonium stearate | Ammonium stearate | Ammonium stearate |
| Amount of (C) used (relative to 100 parts by mass of urethane resin (A)) | 1 | 1 | 1 | 3.5 |
| Density of polyurethane layer (ii) (kg/m³) | 690 | 680 | 690 | 680 |
| Evaluation of texture | A | A | A | A |
| Evaluation of peel strength | A | A | A | A |
| Evaluation of embossing characteristics | T | T | T | T |

It was found that the synthetic leather of the present invention in Examples 9 to 12 has excellent texture, peel strength, and embossing characteristics.

## Claims

1. A foamed urethane sheet, which is formed from a urethane resin composition containing a urethane resin (A), water (B), and a surfactant (C) having no aromatic ring and having a hydrophobic portion having 10 or more carbon atoms, and has a density of 200 to 1,000 kg/m³,
wherein the urethane resin (A) contains, as raw materials, at least one polyisocyanate selected from the group, consisting of 4,4'-diphenylmethane diisocyanate, toluene diisocyanate, cyclohexylmethane diisocyanate, and isophorone diisocyanate, a polyol, a glycol compound having a carboxyl group, and a chain extender, having a number average molecular weight of 50 to 450, the number average molecular weight being measured according to the description, and
the urethane resin (A) has a flow starting temperature of 80°C to 220°C, wherein said flow starting temperature is determined as indicated in the description.

2. The foamed urethane sheet according to claim 1, wherein the surfactant (C) is a stearic acid salt.

3. A synthetic leather having at least a substrate (i) and a polyurethane layer (ii),
wherein the polyurethane layer (ii) is formed from the foamed urethane sheet according to any one of claims 1 to 2.

4. The synthetic leather according to claim 3, wherein the polyurethane layer (ii) is embossed.

## Patentansprüche

1. Geschäumte Urethanfolie, die gebildet ist aus einer Urethanharzzusammensetzung, enthaltend ein Urethanharz (A), Wasser (B) und ein Tensid (C) ohne aromatischen Ring und mit einem hydrophoben Teil mit 10 oder mehr Kohlenstoffatomen, und die eine Dichte von 200 bis 1000 kg/m³ aufweist,
wobei das Urethanharz (A) als Rohstoffe mindestens ein Polyisocyanat, ausgewählt aus der Gruppe bestehend aus 4,4'-Diphenylmethandiisocyanat, Toluoldiisocyanat, Cyclohexylmethandiisocyanat und Isophorondiisocyanat, ein Polyol, eine Glykolverbindung mit einer Carboxylgruppe und einen Kettenverlängerer mit einem zahlenmittleren Molekulargewicht von 50 bis 450 enthält, wobei das zahlenmittlere Molekulargewicht gemäß der Beschreibung gemessen wird, und
das Urethanharz (A) eine Fließbeginn-Temperatur von 80°C bis 220°C aufweist, wobei die Fließbeginn-Temperatur wie in der Beschreibung angegeben bestimmt wird.

2. Geschäumte Urethanfolie gemäß Anspruch 1, wobei das Tensid (C) ein Stearinsäuresalz ist.

3. Synthetisches Leder mit mindestens einem Substrat (i) und einer Polyurethanschicht (ii),
wobei die Polyurethanschicht (ii) aus der geschäumten Urethanfolie gemäß einem der Ansprüche 1 bis 2 gebildet ist.

4. Synthetisches Leder gemäß Anspruch 3, wobei die Polyurethanschicht (ii) geprägt ist.

## Revendications

1. Feuille d'uréthane expansé, qui est formée à partir d'une composition de résine d'uréthane contenant une résine d'uréthane (A), de l'eau (B) et un tensioactif (C) ne comportant pas de cycle aromatique et ayant une partie hydrophobe comportant 10 atomes de carbone ou plus, et qui a une densité de 200 à 1 000 kg/m³,
dans laquelle la résine d'uréthane (A) contient, comme matières premières, au moins un polyisocyanate choisi dans le groupe constitué par le diisocyanate de 4,4'-diphénylméthane, le diisocyanate de toluène, le diisocyanate de cyclohexylméthane et le diisocyanate d'isophorone, un polyol, un composé glycolique ayant un groupe carboxyle, et un agent d'allongement de chaîne, ayant un poids moléculaire moyen en nombre de 50 à 450, le poids moléculaire moyen en nombre étant mesuré conformément à la description, et
la résine uréthane (A) a une température de début d'écoulement comprise entre 80°C et 220°C, ladite température de début d'écoulement étant déterminée comme indiqué dans la description.

2. Feuille d'uréthane expansé selon la revendication 1, dans laquelle le tensioactif (C) est un sel d'acide stéarique.

3. Cuir synthétique comprenant au moins un substrat (i) et une couche de polyuréthane (ii),
dans lequel la couche de polyuréthane (ii) est formée à partir de la feuille d'uréthane expansé selon l'une quelconque des revendications 1 à 2.

4. Cuir synthétique selon la revendication 3, dans lequel la couche de polyuréthane (ii) est gaufrée.
